# EUROPEAN PATENT APPLICATION

(11) **EP 2 835 979 A1**
(43) Date of publication of application: **11.02.2015**
(21) Application number: 12873647.7
(22) Date of filing: 31.05.2012
(51) Int. Cl.: H04N 21/2668

(54) **ATTRIBUTE SETTING METHOD AND DEVICE**

(30) Priority: 01.04.2012 CN 201210098582
(71) Applicant: ZTE Corporation, Shenzhen, Guangdong 518057 (CN)
(72) Inventor: SUN, Renfeng, Shenzhen, Guangdong 518057 (CN); LI, Ming, Shenzhen, Guangdong 518057 (CN); XU, Lin, Shenzhen, Guangdong 518057 (CN); KONG, Dechun, Shenzhen, Guangdong 518057 (CN); WU, Qi, Shenzhen, Guangdong 518057 (CN)
(74) Representative: Bongiovanni, Simone
(86) International application number: PCT/CN2012/076339
(87) International publication number: WO 2013/149430

(57) **Abstract**

The present invention provides a method and a device for setting properties. The method comprises: analyzing and counting one or more program sources selected by a user through an Internet Protocol Television (IPTV) program system; determining program IDs corresponding to the program sources selected by the user according to a analysis and statistics result to acquire the merchandise corresponding to the program IDs in the IPTV merchandise system; and setting the properties of the merchandise, wherein the merchandise properties set are used for indicating how to display the merchandise in the IPTV merchandise system. The problem caused by the identical merchandise recommended to all the users in the IPTV online shopping system in the related art is solved, consequently, personalized services are implemented for different users and the user experience is improved.

## Description

### Field

The present invention relates to the field of communications, in particular to a method and a device for setting properties.

### Background

Internet Protocol Television (IPTV) is a new technology for providing various interactive services, including digital television, to home users, by integrating the broadband cable television network with the internet, media, communications and other technologies. The IPTV may provide various value-added services, including one important value-added service: IPTV online shopping system, which may sell merchandise through the IPTV, such as physical objects (refrigerator, washing machine, sports suits, food and the like), digital high-definition program package, and application or service running in a Set Top Box (STB).

At present, merchandise is displayed in the IPTV online shopping system mainly in two modes: in the first mode, the merchandise displayed to the users is identical and no merchandise is recommended. In the other mode, the merchandise recommended is not personalized and does not conform to the consumption habits and interests and hobbies of the users.

Thereby, the two ways have some defects. For example, in the first mode, the merchandise displayed to the users is identical and no merchandise is recommended, so that the user experience and the buying demands will decrease gradually; while in the second mode, the merchandise which is displayed identically to all the users in the recommendation column of the IPTV shopping system may not conform to the consumption habit, interests and hobbits or buying trend of each user although the recommended merchandise is very popular at present, so, the user experience is poor and the marketing effect of the merchandise will decrease correspondingly.

At present, there is still no effective solution for solving the problem caused by identical merchandise recommended to all the users in the IPTV online shopping system in the related art.

### Summary

Embodiments of the present invention provide a method and a device for setting properties, in order to at least solve the problem caused by the identical merchandise recommended to all the users in the IPTV store system in the related arts.

According to one aspect of an embodiment of the present invention, a method for setting properties is provided. The method includes: performing analysis and statics on at least one program source selected by a user through an IPTV program system; determining at least one program ID corresponding to the at least one program source selected by the user according to an analysis and statistics result, and acquiring the merchandise corresponding to the at least one program ID in the IPTV merchandise system; and setting merchandise properties of the merchandise, wherein the merchandise properties are used for indicating how to display the merchandise in the IPTV online shopping system.

Preferably, acquiring the merchandise corresponding to the at least one program ID in the IPTV online shopping system includes: updating the merchandise in the IPTV online shopping system is updated; and acquiring the merchandise which is updated and corresponds to the at least one program ID in the IPTV merchandise system.

Preferably, acquiring the merchandise corresponding to the at least one program ID in the IPTV merchandise system includes: setting respectively merchandise IDs for all the merchandise in the IPTV online shopping system; and acquiring the merchandise in the IPTV online shopping system according to the at least one program ID and corresponding relationships between the program IDs and the merchandise IDs.

Preferably, performing the analysis and statistics on the at least one program source selected by the user through the IPTV program system comprises: setting a predetermined analysis and statistics period; and performing the analysis and statistics on the at least one program source selected by the user through the IPTV program system during the predetermined analysis and statics period.

Preferably, performing the analysis and statistics on time at which the user select at least one program source to play in the IPTV program system comprises: performing the analysis and statistics on time at which the user play the at least one program source through the IPTV program system; or performing the analysis and statistics on times of playing the at least one program source selected by the user through the IPTV program system.

Preferably, the merchandise, which is corresponding to the at least one program ID and is in the IPTV store system, is acquired through at least one of the following ways: searching with the at least one program ID as a keyword; and matching a type of the at least one program ID with a type of the merchandise.

According to another aspect of an embodiment of the present invention, a device for setting properties is provided. The method includes: an analysis and statistics module configured to perform analysis and statistics on at least one program source selected by a user through an Internet Protocol Television (IPTV) program system; an acquisition module configured to determine at least one program ID corresponding to the at least one program source selected by the user according to an analysis and statistics result, and to acquire the merchandise corresponding to the at least one program ID in an IPTV online shopping system; and a first setting module configured to set merchandise properties of the merchandise, wherein the merchandise properties set are used for indicating how to display the merchandise in the IPTV online shopping system.

Preferably, the analysis and statistics module is configured to perform the analysis and statistics on time at which the user select the at least one program source to play through the IPTV program system, or to perform the analysis and statistics on times of playing the at least one program source selected by the user through the IPTV program system.

Preferably, the acquisition module comprises: an updating module configured to update the merchandise in the IPTV online shopping system; and a second acquisition module configured to acquire the merchandise which is updated and corresponds to the at least one program ID in the IPTV merchandise system.

Preferably, the analysis and statistics module comprises: a second setting module configured to set a predetermined analysis and statistics period; and a second analysis and statistics module configured to perform the analysis and statistics on the at least one program source selected by the user through the IPTV program system during the predetermined analysis and statistics period.

In the embodiments of the present invention, analysis and statistics is performed on at least one program source selected by the user through the IPTV program system, at least one program ID corresponding to the at least one program source selected by the user according to the analysis and statistics result, and the merchandise corresponding to the at least one program ID in the IPTV online shopping system is determined; and the merchandise properties of the merchandise is set, wherein the merchandise properties set are used for indicating how to display the merchandise in the IPTV online shopping system. Through the above-mentioned solution, the problem caused by the identical merchandise recommended to all the users in the IPTV online shopping system in the related arts is solved, consequently, personalized services are implemented for different users and the user experience is improved.

### Brief Description of the Drawings

Drawings, provided for further understanding of the present invention and forming a part of the specification, are used to explain the present invention together with embodiments of the present invention rather than to limit the present invention, wherein:
Fig. 1 is a flowchart of a method for setting properties according to an embodiment of the present invention;
Fig. 2 is a block diagram showing the structure of a device for setting properties according to an embodiment of the present invention;
Fig. 3 is a block diagram showing the structure of a preferred acquisition module in the device for setting properties according to an embodiment of the present invention;
Fig. 4 is a block diagram showing the structure of a preferred analysis and statistics module in the device for setting properties according to an embodiment of the present invention;
Fig. 5 is a diagram showing the structure of an IPTV online shopping system for recommending a user the merchandise according to the watching habit of the user according to an embodiment of the present invention; and
Fig. 6 is a flowchart showing to recommend a user the merchandise according to the watching habit of the user according to one embodiment of the present invention.

### Detailed Description of the Embodiments

The preferred embodiments are described in conjunction with the drawings as follows. The embodiments of the present application and the features of the embodiments can be combined with each other if there is no conflict.

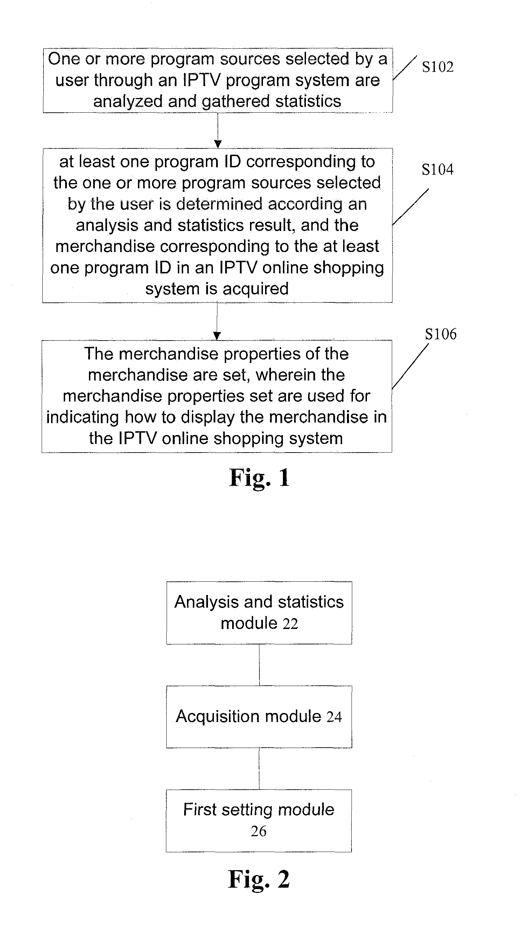

A method for setting properties is provided in an embodiment of the present invention. Fig. 1 is a flowchart of a method for setting properties according to an embodiment of the present invention. As shown in fig. 1, the method includes the following steps.
Step 102: One or more program sources selected by a user through an IPTV program system are analyzed and gathered statistics.
Step 104: at least one program ID corresponding to the one or more program sources selected by the user is determined according an analysis and statistics result, and the merchandise corresponding to the at least one program ID in an IPTV online shopping system is acquired.
Step 106: The merchandise properties of the merchandise are set, wherein the merchandise properties set are used for indicating how to display the merchandise in the IPTV online shopping system.

In the embodiment of the present invention, the program ID corresponding to the program source concerned by the user is acquired and the merchandise corresponding to the program ID in the IPTV online shopping system is acquired, and the merchandise properties of the merchandise are set. The acquired merchandise conforms to the consumption habit, interests and hobbies or buying trend of the user better because it is acquired according to the program source concerned by the user. Because different users may concern different program sources, the merchandise of which the properties are set by different users through this scheme may be different. Consequently, the problem caused by identical merchandise recommended to all the users in the IPTV online shopping system in the related art is solved, personalized services are implemented for different users and the user experience is improved.

In the implementation process, the merchandise properties of the merchandise may be set in various ways only if the merchandise may be distinguished from others to implement personalized service for the user. For example, the merchandise may be set to be high in priority so that the merchandise may be displayed preferably during displaying the merchandise in the IPTV online shopping system for the user; or, a recommended merchandise column is set at an eye-catching location of a browser window and the merchandise is displayed in the recommended merchandise column by setting the merchandise properties of the merchandise; the font and image displaying the merchandise are enlarged; etc.

To recommend the merchandise which meets the demands of the user better to the user, as a preferred implementation, in Step 104, the merchandise in the IPTV online shopping system is updated before the merchandise corresponding to the program ID is acquired, and then the updated merchandise, which corresponds to the program ID and is in the IPTV merchandise system, is acquired. Thereby, the merchandise recommended to the user is the latest, so as to further improve the user experience.

In the implementation process, the merchandise, which is corresponding to the program ID and is in the IPTV merchandise system, may be acquired through different methods. For example, in the first method, merchandise IDs may be set respectively for all the merchandise in the IPTV online shopping system; and the merchandise in the IPTV online shopping system is acquired according to the program ID and the corresponding relationships between the program IDs and the merchandise IDs. The corresponding relationship may be that the merchandise ID is a part of the type of the program ID, or is identical with the program ID, or is a part of the program ID, or is related to the program ID. For example, the merchandise ID and the program ID belong to the same category (such as sports). Of course, it may be the other corresponding relationships.

In the second method, the merchandise corresponding to the program ID may also be acquired in the IPTV online shopping system without setting merchandise IDs for the merchandise. For example, a search may be made with the program ID as a keyword and the searched merchandise is taken as the merchandise corresponding to the program ID in the IPTV merchandise system, wherein the search scope includes the name, abstract or description of the merchandise and the like. The merchandise corresponding to the program ID may also be acquired in the IPTV merchandise system by matching the type of the program ID with that of the merchandise. For example, if the program ID is corresponding to a game, merchandise of which type is card, software and entertainment may be taken as the matched merchandise.

Because the hobbies of the user may change over time, for example, a user likes to watch the game half month ago but likes to watch photographing recently; the corresponding buying trend of the user will also change. Therefore, as a preferred implementation way, a predetermined analysis and statistics period may be set in Step 102; and the time at which the user watch one or more programs through the IPTV program system is analyzed and gathered statistics, wherein the time is within the predetermined analysis and statistics period. For example, during the past three days the time at which the user watches one or more programs may be analyzed and gathered statistics. In such way, the program preference recently concerned by the user may be acquired, and accordingly, the recent buying trend of the user may be acquired. Consequently, the user experience is further improved and the marketing effect of the merchandise may be improved.

In Step 102, one or more program sources selected by the user through the IPTV program system may be analyzed and gathered statistics in various ways. Preferably, the time at which the user watches one or more programs through the IPTV program system may be analyzed and gathered statistics. Or, the times of playing one or more program sources selected by the user through the IPTV program system may be gathered statistics, Of course, the time and times may be further combined to be analyzed and gathered statistics. The program source concerned by the user is acquired by the above-mentioned analysis and statistics, which is convenient to implement

In an embodiment of the present invention, a device for setting properties is further provided, which is configured to implement the embodiments and the preferred embodiments above, thereby needing no further description. As below, the term "module" may implement the combination of software and/or hardware of a predetermined function. Although the device described in the following embodiments is preferably implemented by software, the implementation of hardware or the combination of the software and hardware may also be composed.

Fig. 2 is a block diagram showing the structure of a device for setting properties according to an embodiment of the present invention. As shown, the device includes an analysis and statistics module 22, an acquisition module 24 and a first setting module 26. The device is described below.

The analysis and statistics module 22 is configured to perform analysis and statistics on at least one program source selected by a user through an IPTV program system; the acquisition module 24 is connected with the analysis and statistics module 22 and is configured to determine at least one program ID corresponding to the at least one program source selected by the user according to an analysis and statistics result, and to acquire the merchandise corresponding to the at least one program ID in an IPTV online shopping system; and the first setting module 26 is connected with the acquisition module 24 and is configured to set merchandise properties of the merchandise, wherein the merchandise properties set are used for indicating how to display the merchandise in the IPTV online shopping system.

Preferably, the analysis and statistics module 22 is configured to perform the analysis and statistics on time at which the user select one or more program sources to play through the IPTV program system; or to perform the analysis and statistics on times of playing one or more program source selected by the user through the IPTV program system.

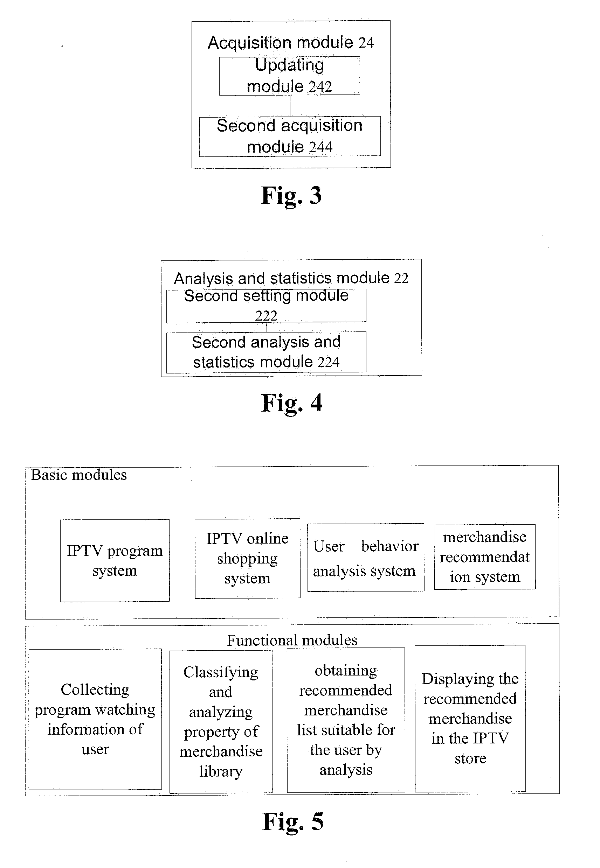

Fig. 3 is a block diagram showing the structure of a preferred acquisition module 24 in the device for setting properties in an embodiment of the present invention. As shown in Fig.3, the acquisition module 24 includes an updating module 242 and a second acquisition module 244. The updating module 242 is configured to update the merchandise in the IPTV merchandise system; and the second acquisition module 244 is connected with the updating module 242 and is configured to acquire the updated merchandise which corresponds to the program ID in the IPTV merchandise system.

Fig. 4 is a block diagram showing the structure of a preferred analysis and statistics module 22 in the device for setting properties in an embodiment of the present invention. As shown in Fig. 4, the analysis and statistics module 22 includes a second setting module 222 and a second analysis and statistics module 224. The analysis and statistics module 224 includes: a second setting module 222, which is configured to set a predetermined analysis and statistics period, and a second analysis and statistics module 224, which is connected with the second setting module 222 and is configured to analyze and gather statistics on the time at which the user select one or more program sources to play through the IPTV program system, wherein the time is within the predetermined analysis and statistics period.

The device is described below in conjunction with a preferred embodiment, which combines the embodiments above and its preferred implementation ways.

In the preferred embodiment, an IPTV online shopping system for carrying out personalized recommendation according to the watching habit of a user and an implementation method thereof are provided. By the method in the preferred embodiment of the present invention, personalized recommendation may be carried out for each user in the IPTV online shopping system according to the watching habit of the user. For example, the program, merchandise, service and the like that the user is interested in may be recommended to the user automatically in the IPTV online shopping system so as to help the user acquire the required product quickly. Thereby, the user experience is improved and the order rate of the product may be increased.

In this preferred embodiment, the IPTV online shopping system for carrying out personalized recommendation according to the watching habit of the user may include: an IPTV program play module (which functions equivalently as the IPTV program system above), an IPTV store module (which functions equivalently as the IPTV online shopping system above), a user behaviour analysis module (which functions equivalently as the acquisition module above), and a merchandise recommendation module ((which functions equivalently as the setting module above). The function of each module is described below in detail.
(1) An IPTV program play module is configured to play the IPTV program (including live broadcast, re-broadcast and other play ways), manage the IPTV program sources and collects and synchronize the user watching behaviour information. This module may set a tag or a keyword for each program source. For example, one or more tags, such as "sports", "NBA" and "YaoMing", may be set for an NBA game.
   When a user watches or orders a favourite program through this module, the IPTV program play module may record the user watching behaviour information. Meanwhile, the module may further synchronize the basic user property of the IPTV, the user watching behaviour information and the tag information of the program sources to the user behaviour analysis module.
(2) An IPTV store module may be configured to provide an internet store to an IPTV user and may sell virtual merchandise (such as IPTV application, IPTV order programme and IPTV service) and actual merchandise (such as gym shoes and basketballs).
   Through this module, an IPTV user may browse the merchandise in the internet store and select the required merchandise to buy. The IPTV store module may further set tags respectively for all the merchandise, such as "basketball shoes" and "football shoes" and synchronize the merchandise information to a merchandise recommendation module.
(3) A user behaviour analysis module receives the basic user property and the user watching behaviour information, the tag information of the program sources and other data synchronized from the IPTV program play module, and statistically analyzes the user watching behaviour information in a recent period to acquire the recent program preference of the user (such as long watching time), thereby acquiring one or more tag types which are preferred by the user recently.
   For example, if the user often watches the NBA game of Rockets, the acquired program tag property concerned by the user is at least one of "NBA" and "YaoMing".
   Meanwhile, the user behaviour analysis module receives the personalized recommendation request from the merchandise recommendation module and feeds back the tag information highly concerned by the user recently to the merchandise recommendation module according to the user identity information carried in the request of the merchandise recommendation module.
(4) A merchandise recommendation module receives the merchandise information synchronized from the IPTV store module and initiates a personalized recommendation request to the user behaviour analysis module according to the personalized recommendation request of the IPTV online shopping system to acquire the program preference highly concerned by the user recently.

Meanwhile, the merchandise recommendation module filters out the merchandise of which the tag is highly related to the program ID concerned by the user (such as the merchandise of which the type is identical with the type of the program or the merchandise of which the keyword is identical with the keyword of the program) according to the basic property of the merchandise information, to feed it back to the IPTV store module. For example, if the user often watches the NBA game of Rockets recently, the merchandise recommendation module may take the merchandise "Nike basketball shoes of limited edition" highly related to the NBA as a recommendation merchandise to feed it back to the IPTV online shopping system; and the store displays the merchandise at an eye-catching position for the user to browse and order.

In this preferred embodiment, in conjunction with the above-mentioned system, the method for realizing the IPTV online shopping system for carrying out personalized recommendation according to the watching habit of the user may include the following steps:
Step 1: The system provides an IPTV program play module which set a program source tags during the entry of the program sources, so that the user may watch the IPTV program through the IPTV program play module.
Step 2: The IPTV program play module records the watching record of the user and synchronizes the record to the user behaviour analysis module. The IPTV program play module synchronizes the basic property of the IPTV user and the tag property of the program sources to the user behaviour analysis module.
Step 3: The user behaviour analysis module statistically analyzes the watching record of the user to acquire the program property mostly concerned by the user recently in conjunction with the basic property of the user.
Step 4: The user accesses the IPTV store module, and the IPTV store module initiates a recommendation request to the merchandise recommendation system to request to acquire merchandise which is suitable to be recommended to the user, wherein the IPTV store module sets a merchandise tag properties respectively for all the merchandise which is in the store and synchronizes the information to the merchandise recommendation module.
Step 5: The merchandise recommendation module initiates a request to the user behaviour analysis system to request to acquire the recent primary focus of the user.
Step 6: The merchandise recommendation module filters all the merchandise according to the tag properties of the merchandise, which are corresponding to the acquired focus of the user, to select the merchandise mostly related to the focus of the user, and feedback the acquired recommended merchandise to the IPTV application store.
Step 7: The IPTV store module shows the acquired recommended merchandise to the user at the recommendation position.

Through the embodiments above and its preferred embodiments, a personalized merchandise may be recommended to the IPTV online shopping system; and the user watching the IPTV and using the IPTV online shopping system may acquire merchandise which conforms to their interests and hobbies and consumption habits better through the personalized recommendation function. Meanwhile, a merchant may show the merchandise to a suitable user more quickly, so that the merchandise is sold more intelligently.

The system and the method provided by an embodiment of the present invention are described below respectively. Fig. 5 is a diagram showing the structure of an IPTV online shopping system for carrying out personalized recommendation according to the watching habit of a user in one embodiment of the present invention. As shown in Fig. 5, the system mainly includes basic modules and functional modules.

The basic modules: setting some basic information elements.

An IPTV program system (same as the IPTV program play module above) is configured to play the IPTV program, manage the IPTV program sources and collect and synchronize the watching behaviour information of the user. An IPTV online shopping system (same as the IPTV store module) is configured to provide an internet store to an IPTV user and selling virtual and actual merchandise. A user behaviour analysis system (same as the user behaviour analysis module above) is configured to receive the basic property and behaviour record of the user, the tag information of the program sources and other data synchronized from the IPTV program system, and statistically analyze the behaviour record of the user in a recent period to acquire the recent program preference of the user, thereby acquiring the tag type which is mostly concerned by the user recently. A merchandise recommendation system (same as the merchandise recommendation module above) is configured to receive the merchandise information synchronized from the IPTV online shopping system and initiate a personalized recommendation request to the user behaviour analysis system according to the personalized recommendation request of the IPTV online shopping system to acquire the program preference highly concerned by the user recently.

Functional modules include execution modules for recommending personalized merchandise in the IPTV online shopping system.

Functional modules are configured to collect the program watching information of the user, classify and analyze the property of merchandise library, obtain a recommended merchandise list suitable for the user by analyzing; and display the recommended merchandise in the IPTV store.

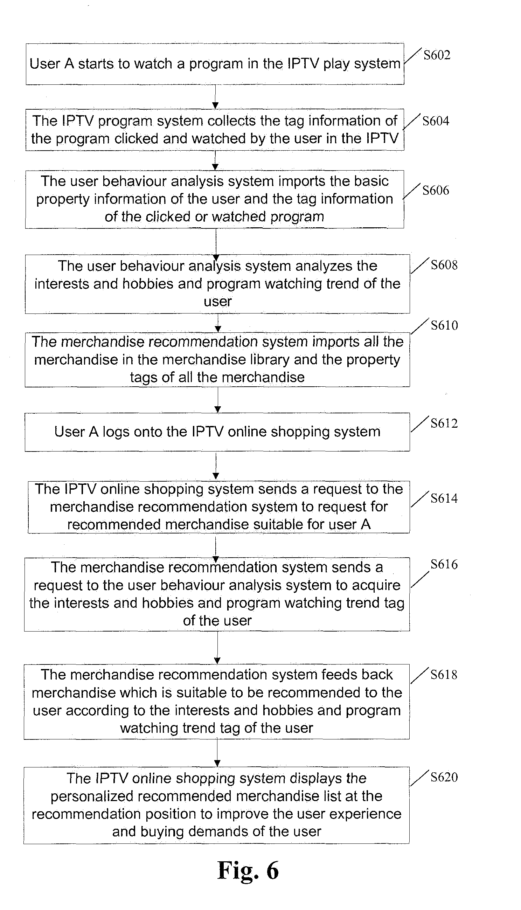

Fig. 6 is a flowchart showing personalized recommendation carried out according to the watching habit of a user according to an embodiment of the present invention. As shown in Fig. 6, the flow includes the following steps.
Step 602: User A starts to watch a program in the IPTV play system.
Step 604: The IPTV program system collects the tag information of the program clicked and watched by the user in the IPTV.
Step 606: The user behaviour analysis system imports the basic property information of the user and the tag information of the clicked or watched program.
Step 608: The user behaviour analysis system analyzes the interests and hobbies and program watching trend of the user.
Step 610: The merchandise recommendation system imports all the merchandise in the merchandise library and the property tags of all the merchandise.
Step 612: User A logs onto the IPTV online shopping system.
Step 614: The IPTV online shopping system sends a request to the merchandise recommendation system to request for recommended merchandise suitable for user A.
Step 616: The merchandise recommendation system sends a request to the user behaviour analysis system to acquire the interests and hobbies and program watching trend tag of the user.
Step 618: The merchandise recommendation system feeds back merchandise which is suitable to be recommended to the user according to the interests and hobbies and program watching trend tag of the user.
Step 620: The IPTV online shopping system displays the personalized recommended merchandise list at the recommendation position to improve the user experience and buying demands of the user.

As seen from the above-mentioned steps, for an IPTV user, merchandise may be recommended according to their interests and hobbies in the IPTV internet store so as to increase their interests on the merchandise greatly; while for a merchandise manufacturer or agent, the quantity of sale is increased greatly due to the successful matching between the merchandise and the users, accordingly, the greatest marketing effect of the merchandise is achieved and a win-win situation will be achieved for the merchandise manufacturer or agent and the operator.

In another embodiment, software is further provided, which is configured to execute the technical schemes described in the embodiments and preferred embodiments above.

In another embodiment, a storage medium is further provided, in which the software is stored. The storage medium includes but is not limited to a compact disk, a floppy disk, a hard disk, an erasable memory and the like.

Obviously, those skilled in the art shall understand that the modules or steps of the present invention may be implemented by general computing device and centralized in a single computing device or distributed in a network consisting of multiple computing device. Optionally, the modules or steps may be implemented by program codes executable by the computing device, so that they may be stored in a storage device and executed by the computing device, and, in some cases, the steps may be executed in a sequence different from the illustrated or described sequence, or they are respectively made into the integrated circuit modules or many of them are made into a single integrated circuit module. By doing so, the present invention is not limited to any specific combination of hardware and software.

What said above are only the preferred embodiments of the present invention and not intended to limit the present invention. For those skilled in the art, various modifications and changes may be made in the present invention. Any modifications, equivalent replacements, improvements and the like within the spirit and principle of the present invention shall fall within the scope of protection of the present invention.

## Claims

1. A method for setting properties, **characterized by** comprising:
Performing analysis and statistics on at least one program source selected by a user through an Internet Protocol Television (IPTV) program system;
determining at least one program ID corresponding to the at least one program source selected by the user according to an analysis and statistics result, and acquiring merchandise corresponding to the at least one program ID in an IPTV online shopping system; and
setting merchandise properties of the merchandise, wherein the merchandise properties set are used for indicating how to display the merchandise in the IPTV online shopping system.

2. The method according to claim 1, **characterized in that** acquiring the merchandise corresponding to the at least one program ID in the IPTV online shopping system comprises:
updating the merchandise in the IPTV online shopping system; and
acquiring the merchandise which is updated and corresponds to the at least one program ID in the IPTV merchandise system.

3. The method according to claim 1, **characterized in that** acquiring the merchandise corresponding to the at least one program ID in the IPTV merchandise system comprises:
setting respectively merchandise IDs for all the merchandise in the IPTV online shopping system; and
acquiring the merchandise in the IPTV online shopping system according to the at least one program ID and corresponding relationships between the program IDs and the merchandise IDs.

4. The method according to claim 1, **characterized in that** performing the analysis and statistics on the at least one program source selected by the user through the IPTV program system comprises:
setting a predetermined analysis and statistics period; and
performing the analysis and statistics on the at least one program source selected by the user through the IPTV program system during the predetermined analysis and statics period.

5. The method according to any one of claims 1 to 4, **characterized in that** performing the analysis and statistics on the at least one program source selected by the user through the IPTV program system comprises:
performing the analysis and statistics on time at which the user select the at least one program source to play in the IPTV program system; or performing the analysis and statistics on times of playing the at least one program source selected by the user through the IPTV program system.

6. The method according to any one of claims 1 to 4, **characterized in that** the merchandise, which is corresponding to the at least one program ID and is in the IPTV online shopping system, is acquired through at least one of the following ways:
searching with the at least one program ID as a keyword; and
matching a type of the at least one program ID with a type of the merchandise.

7. A device for setting properties, **characterized by** comprising:
an analysis and statistics module configured to perform analysis and statistics on at least one program source selected by a user through an Internet Protocol Television (IPTV) program system;
an acquisition module configured to determine at least one program ID corresponding to the at least one program source selected by the user according to an analysis and statistics result, and to acquire the merchandise corresponding to the at least one program ID in an IPTV online shopping system; and
a first setting module configured to set merchandise properties of the merchandise, wherein the merchandise properties set are used for indicating how to display the merchandise in the IPTV online shopping system.

8. The device according to claim 7, **characterized in that** the analysis and statistics module is configured to perform the analysis and statistics on time at which the user selects the at least one program source to play through the IPTV program system, or to perform the analysis and statistics on times of playing the at least one program source selected by the user through the IPTV program system.

9. The device according to claim 7, **characterized in that** the acquisition module comprises:
an updating module configured to update the merchandise in the IPTV online shopping system; and
a second acquisition module configured to acquire the merchandise which is updated and corresponds to the at least one program ID in the IPTV merchandise system.

10. The device according to claim 7, **characterized in that** the analysis and statistics module comprises:
a second setting module configured to set a predetermined analysis and statistics period; and
a second analysis and statistics module configured to perform the analysis and statistics on the at least one program source selected by the user through the IPTV program system during the predetermined analysis and statistics period.
